# FASCICULE DE BREVET EUROPEEN

(11) **EP 3 910 974 B1**
(45) Date de publication et mention de la délivrance du brevet: **21.02.2024**
(21) Numéro de dépôt: 21172394.5
(22) Date de dépôt: 06.05.2021
(51) Int. Cl.: H04W 8/18, G06K 19/077, H04W 88/06

(54) **MODULE D'IDENTIFICATION D'ABONNÉ ET DISPOSITIF ÉLECTRONIQUE**
TEILNEHMERIDENTIFIKATIONSMODUL UND ELEKTRONISCHES GERÄT
SUBSCRIBER IDENTIFICATION MODULE AND ELECTRONIC DEVICE

(30) Priorité: 14.05.2020 FR 2004770
(43) Date de publication de la demande: 17.11.2021
(73) Titulaire: STMicroelectronics (Rousset) SAS, 13790 Rousset (FR)
(72) Inventeur: CRESPO, Thierry, 13530 TRETS (FR); RIZZO, Pierre, 13530 TRETS (FR); TRAMONI, Alexandre, 83330 LE BEAUSSET (FR); PORTEFAIX, Patrice, 83470 SAINT-MAXIMIN-LA-SAINTE-BAUME (FR)
(74) Mandataire: Cabinet Beaumont

(56) Documents cités:
- EP-A1- 2 172 877
- WO-A1-2010/105458
- US-B2- 8 364 203
- US-B2- 9 374 697

## Description

### Domaine technique

La présente description concerne de façon générale les dispositifs électroniques et, plus particulièrement, les dispositifs de communication sans fil utilisant des cartes à module d'identification d'abonné (Subscriber Identity Module - SIM).

### Technique antérieure

On connaît de nombreux dispositifs électroniques, par exemple, des téléphones mobiles, comportant chacun un ou plusieurs emplacements destinés à recevoir une carte à module d'identification d'abonné, ou carte SIM. Chaque carte SIM d'un dispositif lui permet généralement de se connecter à un réseau de téléphonie mobile, et d'échanger des données avec d'autres dispositifs par l'intermédiaire de ce réseau.

EP2172877 A1 décrit un module d'identification d'abonné qui inclut un circuit de commutation permettant sélectivement d'aiguiller les communications soit vers une interface de communication NFC dudit module, soit vers le module NFC du terminal utilisateur hôte.

Parmi les dispositifs comportant un ou plusieurs emplacements destinés à recevoir chacun une carte SIM, certains dispositifs comportent, par ailleurs, un module embarqué d'identification d'abonné (embedded Subscriber Identity Module - eSIM). Toutefois, l'intégration de modules embarqués d'identification d'abonné dans de tels dispositifs s'effectue généralement au détriment du nombre d'emplacements destinés à recevoir une carte SIM. Cela nuit, par conséquent, à la flexibilité d'utilisation de ces dispositifs.

### Résumé de l'invention

Il existe un besoin d'améliorer les dispositifs comportant un module embarqué d'identification d'abonné et au moins une carte SIM.

Un mode de réalisation pallie tout ou partie des inconvénients des dispositifs comportant un module embarqué d'identification d'abonné et au moins une carte SIM connus.

Un mode de réalisation prévoit un module d'identification d'abonné comportant : une première interface de communication, comprenant des premiers plots destinés à être reliés à un circuit modulateur-démodulateur ; une deuxième interface de communication, comprenant des deuxièmes plots destinés à être reliés à une carte à module d'identification d'abonné ; et un circuit de commutation, configuré pour relier les premiers plots aux deuxièmes plots ou à un module de communication intégré au module d'identification d'abonné.

Selon un mode de réalisation, le module d'identification d'abonné comporte en outre une mémoire non volatile, le circuit de commutation étant commandé en fonction de l'état d'un bit d'un registre de ladite mémoire.

Selon un mode de réalisation, le circuit de commutation comporte un module d'analyse et de routage, configuré pour analyser et rediriger des signaux reçus par la première interface de communication du module d'identification d'abonné.

Selon un mode de réalisation, chacune des première et deuxième interfaces est choisie parmi : une interface normalisée ISO 7816 ; une interface I2C ; une interface I3C ; et une interface série SPI.

Un mode de réalisation prévoit un dispositif électronique comportant : un module d'identification d'abonné tel que décrit ; un circuit modulateur-démodulateur ; et un premier emplacement destiné à recevoir une première carte à module d'identification d'abonné.

Selon un mode de réalisation, le module d'identification d'abonné est un module embarqué d'identification d'abonné.

Selon un mode de réalisation, le module d'identification d'abonné fait partie d'un module de communication en champ proche du dispositif.

Selon un mode de réalisation, le module d'identification d'abonné est intégré à un module sécurisé du module de communication en champ proche du dispositif.

Selon un mode de réalisation, le dispositif comporte en outre un microprocesseur de type système sur une puce, le module d'identification d'abonné étant intégré audit microprocesseur.

Selon un mode de réalisation : le circuit modulateur-démodulateur comporte une troisième interface de communication, comprenant des troisièmes plots reliés aux premiers plots de la première interface de communication du module d'identification d'abonné ; et le premier emplacement comporte une quatrième interface de communication, comprenant des quatrièmes plots reliés aux deuxièmes plots de la deuxième interface de communication du module d'identification d'abonné.

Selon un mode de réalisation, le circuit modulateur-démodulateur comporte en outre une cinquième interface de communication, comprenant des cinquièmes plots reliés à des sixièmes plots d'une sixième interface de communication d'un deuxième emplacement destiné à recevoir une deuxième carte à module d'identification d'abonné.

### Brève description des dessins

Ces caractéristiques et avantages, ainsi que d'autres, seront exposés en détail dans la description suivante de modes de réalisation et modes de mise en oeuvre particuliers faite à titre non limitatif en relation avec les figures jointes parmi lesquelles :
la figure 1 représente, de façon schématique et sous forme de blocs, un exemple de système de communication radiofréquence du type auquel s'appliquent, à titre d'exemple, les modes de réalisation et modes de mise en oeuvre décrits ;
la figure 2 représente, de façon schématique et sous forme de blocs, un exemple de dispositif électronique de communication radiofréquence ;
la figure 3 représente, de façon schématique et sous forme de blocs, un mode de réalisation d'un dispositif électronique de communication radiofréquence comportant un module embarqué d'identification d'abonné ;
la figure 4 représente, de façon schématique et partielle, un mode de réalisation du module embarqué d'identification d'abonné du dispositif de la figure 3 ;
la figure 5 représente, de façon schématique et sous forme de blocs, un autre mode de réalisation d'un dispositif électronique de communication radiofréquence comportant un module embarqué d'identification d'abonné ;
la figure 6 représente, de façon schématique et partielle, un mode de réalisation du module embarqué d'identification d'abonné du dispositif de la figure 5 ;
la figure 7 représente, de façon schématique et sous forme de blocs, un mode de réalisation d'un dispositif électronique de communication radiofréquence comportant un module intégré d'identification d'abonné ;
la figure 8 représente, de façon schématique et sous forme de blocs, un autre mode de réalisation d'un dispositif électronique de communication radiofréquence comportant un module intégré d'identification d'abonné ; et
la figure 9 représente un téléphone mobile intégrant un circuit de communication radiofréquence comportant un module embarqué d'identification d'abonné.

### Description des modes de réalisation

De mêmes éléments ont été désignés par de mêmes références dans les différentes figures. En particulier, les éléments structurels et/ou fonctionnels communs aux différents modes de réalisation et modes de mise en oeuvre peuvent présenter les mêmes références et peuvent disposer de propriétés structurelles, dimensionnelles et matérielles identiques.

Par souci de clarté, seuls les étapes et éléments utiles à la compréhension des modes de réalisation et modes de mise en oeuvre décrits ont été représentés et sont détaillés. En particulier, la génération des signaux radiofréquence et leur interprétation n'ont pas été détaillées, les modes de réalisation et modes de mise en oeuvre décrits étant compatibles avec les techniques usuelles de génération et d'interprétation de ces signaux.

Sauf précision contraire, lorsque l'on fait référence à deux éléments connectés entre eux, cela signifie directement connectés sans éléments intermédiaires autres que des conducteurs, et lorsque l'on fait référence à deux éléments reliés (en anglais "coupled") entre eux, cela signifie que ces deux éléments peuvent être connectés ou être reliés par l'intermédiaire d'un ou plusieurs autres éléments.

Dans la description qui suit, lorsque l'on fait référence à des qualificatifs de position absolue, tels que les termes "avant", "arrière", "haut", "bas", "gauche", "droite", etc., ou relative, tels que les termes "dessus", "dessous", "supérieur", "inférieur", etc., ou à des qualificatifs d'orientation, tels que les termes "horizontal", "vertical", etc., il est fait référence, sauf précision contraire, à l'orientation des figures.

Sauf précision contraire, les expressions "environ", "approximativement", "sensiblement", et "de l'ordre de" signifient à 10 % près, de préférence à 5 % près.

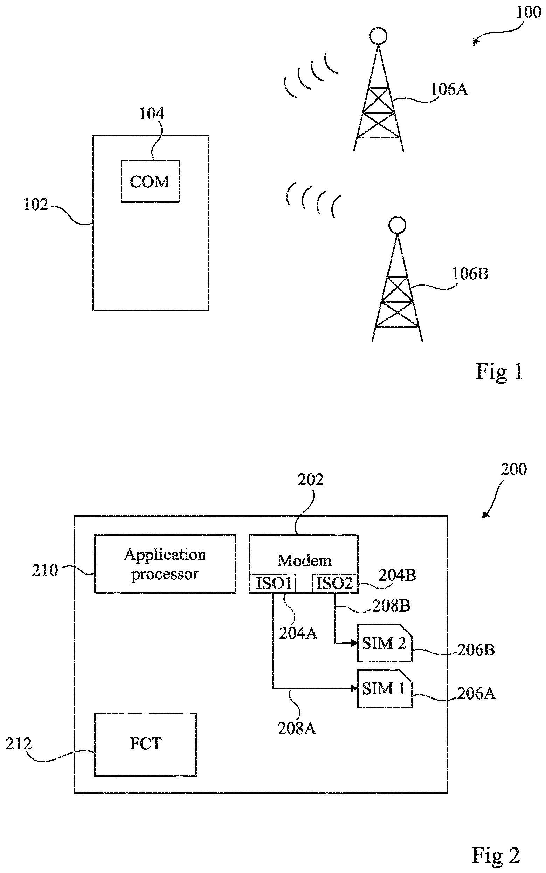

La figure 1 représente, de façon schématique et sous forme de blocs, un exemple de système 100 de communication radiofréquence du type auquel s'appliquent, à titre d'exemple, les modes de réalisation et modes de mise en oeuvre décrits.

Dans l'exemple représenté, le système 100 comprend un dispositif 102 capable de mettre en oeuvre des communications radiofréquence. On considère arbitrairement, dans la suite de la description, que le dispositif 102 est un téléphone mobile. Cela n'est toutefois pas limitatif, le dispositif 102 pouvant alternativement être, par exemple, une tablette tactile, une montre connectée, un bracelet connecté, un véhicule connecté ou, plus généralement, tout type d'objet connecté.

Le téléphone mobile 102 comporte un circuit de communication radiofréquence symbolisé, en figure 1, par un bloc 104 (COM). Le circuit 104 de communication radiofréquence permet, par exemple, au téléphone mobile 102 d'échanger des données avec des antennes 106A et 106B. En fonction, par exemple, des fonctionnalités du circuit 104, la communication entre le téléphone mobile 102 et les antennes 106A et 106B s'effectue de manière alternative, le téléphone mobile 102 ne pouvant alors échanger des données qu'avec une seule antenne 106A, 106B à la fois, ou de manière simultanée, le téléphone mobile 102 pouvant alors échanger des données avec les deux antennes 106A et 106B à la fois.

À titre d'exemple, les antennes 106A et 106B du système 100 font chacune partie d'une infrastructure de téléphonie mobile différente. Ces infrastructures sont, par exemple, exploitées chacune par un opérateur téléphonique différent. Cela permet, par exemple, au téléphone mobile 102 d'émettre et de recevoir des appels téléphoniques, des messages et/ou des données en utilisant un premier réseau de téléphonie mobile, mis à disposition par l'opérateur exploitant l'antenne 106A, et/ou un deuxième réseau de téléphonie mobile, mis à disposition par l'autre opérateur exploitant l'antenne 106B.

De manière générale, les infrastructures de téléphonie mobile, dont les antennes 106A et 106B font respectivement partie, permettent par exemple au dispositif 102 de communiquer avec d'autres dispositifs (non représentés).

La figure 2 représente, de façon schématique et sous forme de blocs, un exemple de dispositif électronique 200 de communication radiofréquence. Le dispositif 200 correspond, par exemple, au dispositif 102 de la figure 1.

Dans l'exemple représenté, le dispositif 200 comporte un circuit modulateur-démodulateur ou modem 202 (Modem). Le modem 202 possède, par exemple, deux interfaces 204A (ISO1) et 204B (ISO2) de communication comme illustré en figure 2.

Chaque interface de communication 204A, 204B du dispositif 200 est reliée à une carte 206A (SIM 1), 206B (SIM 2) à module d'identification d'abonné (Subscriber Identity Module - SIM), ou carte SIM. Plus précisément, dans l'exemple illustré en figure 2, les interfaces de communication 204A et 204B sont respectivement connectées, par des liaisons 208A et 208B, aux cartes SIM 206A et 206B.

Les cartes SIM 206A et 206B sont, dans l'exemple de la figure 2, des cartes SIM physiques, typiquement des cartes à circuit intégré universelles (Universal Integrated Circuit Card - UICC) amovibles. En pratique, les cartes SIM 206A et 206B sont généralement insérées chacune dans un emplacement ou logement (non représenté) du dispositif 200. En fonction, notamment, des dimensions des emplacements du dispositif 200 destinés à recevoir les cartes SIM 206A et 206B, ces cartes SIM sont, par exemple, au format « Mini SIM » (2FF), « Micro SIM » (3FF) ou « Nano SIM » (4FF).

Chaque carte SIM 206A, 206B contient, en général, des informations spécifiques à un contrat ou abonnement souscrit par un abonné auprès d'un opérateur ou fournisseur d'accès (par exemple, un opérateur de réseau de téléphonie mobile ou un fournisseur d'accès à internet). Ces informations prennent la forme, par exemple, d'un code pays, d'un identifiant propre à l'opérateur et d'un identifiant propre à l'abonné.

Dans l'exemple représenté, le dispositif 200 comporte, en outre, un microprocesseur 210 (Application processor). Le microprocesseur 210 est, par exemple, un microprocesseur principal du dispositif 200. À titre d'exemple, le microprocesseur 210 est intégré à une architecture de type système sur une puce (System on a Chip - SoC). Le microprocesseur 210 exécute, par exemple, des instructions de code de programme permettant à différents composants ou périphériques du dispositif 200 de fonctionner.

Le dispositif 200 peut comporter d'autres circuits. Ces circuits sont, en figure 2, symbolisés par un bloc 212 (FCT) .

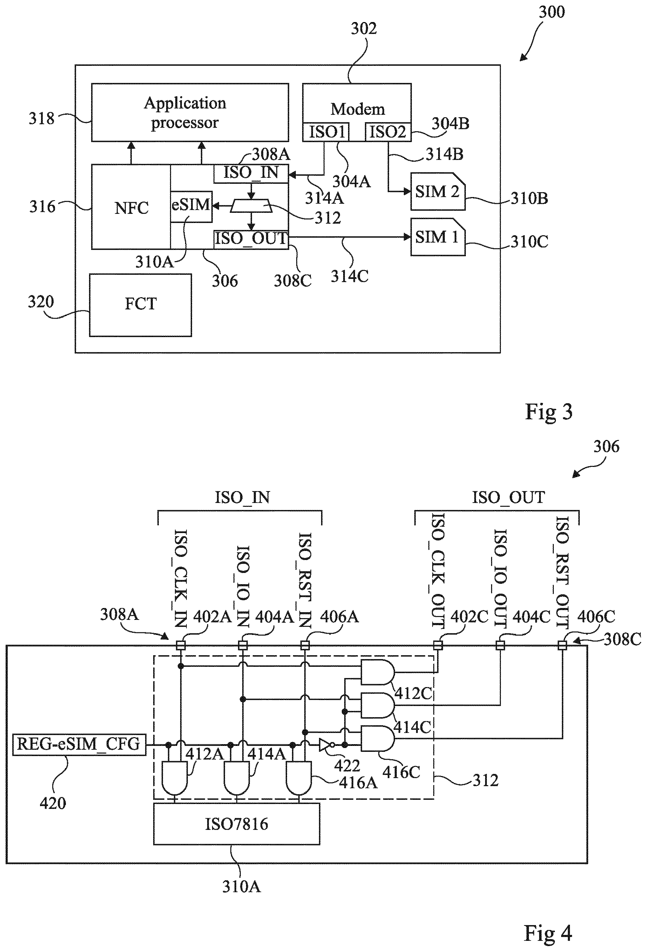

La figure 3 représente, de façon schématique et sous forme de blocs, un mode de réalisation d'un dispositif 300 électronique de communication radiofréquence.

Le dispositif 300 de la figure 3 comporte un circuit modulateur-démodulateur 302 (Modem), ou modem. Le modem 302 du dispositif 300 est, par exemple, analogue au modem 202 du dispositif 200 précédemment décrit en relation avec la figure 2. Dans l'exemple représenté, le modem 302 comporte des interfaces 304A (ISO1) et 304B (ISO2). Les interfaces 304A et 304B du modem 302 sont, par exemple, respectivement analogues aux interfaces 204A et 204B du modem 202.

Selon ce mode de réalisation, le dispositif 300 comporte, en outre, un module 306 embarqué d'identification d'abonné (embedded Subscriber Identity Module - eSIM). Dans l'exemple représenté, le module 306 embarqué d'identification d'abonné du dispositif 300 comprend :
une première interface 308A (ISO_IN) de communication reliée, de préférence connectée, au circuit modulateur-démodulateur 302 ; et
une deuxième interface 308C (ISO_OUT) de communication reliée, de préférence connectée, à une première carte SIM 310C (SIM 1) ;
un module 310A (eSIM) de communication ; et
un circuit 312 de commutation.

Dans l'exemple représenté :
l'interface 304A du modem 302 est connectée, par une liaison 314A, à la première interface 308A du module 306 ;
l'interface 304B du modem 302 est connectée, par une liaison 314B, à une deuxième carte SIM 310B (SIM 2) ; et
la deuxième interface 308C du module 306 est connectée, par une liaison 314C, à la carte SIM 310C.

Plus précisément, des plots (non représentés) de l'interface 304A sont connectés, par la liaison 314A, à des plots (non représentés) de la première interface 308A. De façon analogue, des plots (non représentés) de l'interface 304B sont connectés, par la liaison 314B, à des plots (non représentés) d'un emplacement (non représenté) destiné à recevoir la carte SIM 310B. En outre, des plots (non représentés) de la deuxième interface 308C sont connectés, par la liaison 314C, à des plots (non représentés) d'un emplacement (non représenté) destiné à recevoir la carte SIM 310C.

Dans la suite de la description, on considère arbitrairement que les interfaces 304A, 304B, 308A et 308C sont des interfaces normalisées ISO/IEC 7816, et que les liaisons 314A, 314B et 314C sont des liaisons normalisées ISO/IEC 7816. Par interfaces et liaisons normalisées ISO/IEC 7816, on entend des interfaces et des liaisons de communication conformes aux exigences de la norme ISO/IEC 7816, par exemple conformes aux exigences de la partie 3 de la norme ISO/IEC 7816 dans sa version de 2006 (ISO/IEC 7816-3:2006 Cartes à contacts - Interface électrique et protocoles de transmission).

Les modes de réalisation et modes de mise en oeuvre décrits sont toutefois transposables par la personne du métier à d'autres types d'interfaces et de liaisons choisies, par exemple, parmi :
des interfaces et liaisons I2C ;
des interfaces et liaisons I3C ; et
des interfaces et liaisons série SPI.

Les cartes SIM 310B et 310C du dispositif 300 sont, par exemple, analogues aux cartes SIM 206B et 206A du dispositif 200 (figure 2).

Selon un mode de réalisation, le module 306 embarqué d'identification d'abonné fait partie d'un module 316 (NFC) de communication en champ proche (Near-Field Communication - NFC). Le module 316 permet au dispositif 300 de communiquer, par exemple, avec un autre dispositif (non représenté) analogue au dispositif 300, par couplage électromagnétique en champ proche.

Le module 306 embarqué d'identification d'abonné est, par exemple, intégré à un élément sécurisé (non représenté), par exemple un élément sécurisé embarqué (embedded Secure Element - eSE) associé ou couplé au module 316 de communication en champ proche. En pratique, le module 316 de communication en champ proche et l'élément sécurisé intégrant le module 306 embarqué d'identification d'abonné peuvent faire partie d'une même puce électronique.

L'élément sécurisé est, par exemple, un composant électronique configuré pour stocker et/ou traiter tout ou partie de données dites secrètes, dont on souhaite réserver l'accès à certains utilisateurs ou circuits. À titre d'exemple, l'élément sécurisé met en oeuvre un ou plusieurs algorithmes de chiffrement et mémorise une ou plusieurs clés secrètes utilisées par ce ou ces algorithmes lors d'opérations de chiffrement de données.

Dans l'exemple représenté, les modules 306 et 316 sont reliés ou connectés à un microprocesseur 318 (Application processor) du dispositif 300. Le microprocesseur 318 du dispositif 300 est, par exemple, analogue au microprocesseur 210 du dispositif 200 précédemment décrit en relation avec la figure 2.

En pratique, le module 306 d'identification d'abonné est, par exemple :
un module physique, destiné à être soudé à une carte de circuit imprimé ; ou
un module programmé dans un logiciel (software Subscriber Identity Module - soft SIM) exécuté par un circuit du dispositif 300.

Le module 310A de communication est, par exemple, un module capable d'interpréter des signaux transmis par le modem 302, et de générer des signaux à transmettre au modem 302. Plus généralement, le module 310A est, par exemple, programmé pour posséder des fonctionnalités similaires à celles de la carte SIM 310B ou de la carte SIM 310C.

En fonctionnement, le module 306 embarqué d'identification d'abonné échange des signaux avec le modem 302 par l'intermédiaire de la liaison 314A. Le circuit 312 de commutation permet alors notamment d'aiguiller ces signaux vers la carte SIM 310C ou vers le module 310A de communication, intégré au module 306 embarqué d'identification d'abonné.

Un avantage du dispositif 300 exposé en relation avec la figure 3 réside dans le fait qu'il permet l'utilisation soit des deux cartes SIM physiques 310B et 310C, soit du module 310A de communication et de la carte SIM physique 310B. Cela confère ainsi une plus grande flexibilité d'utilisation au dispositif 300 par rapport, notamment, au dispositif 200 de la figure 2 dans lequel seule l'utilisation des deux cartes SIM physiques 206A et 206B est possible. En effet, la présence du circuit 312 de commutation dans le dispositif 300 offre la possibilité de choisir d'utiliser le module 310A et la carte SIM 310B (la carte SIM 310C et l'emplacement associé pouvant, dans ce cas, être omis), ou de n'utiliser que les cartes SIM 310B et 310C, c'est-à-dire de se ramener à un fonctionnement analogue au dispositif 200 de la figure 2. Ce choix est, par exemple, effectué par le fabriquant du dispositif 300 lors d'un paramétrage en usine.

Un autre avantage du dispositif 300 tient au fait que le circuit 312 de commutation, permettant sélectivement d'aiguiller les communications avec le modem 302 soit vers le module 310A, soit vers la carte SIM 310C est interne au module 306 embarqué d'identification d'abonné. Cela permet une réduction de coût, de dimensions et de complexité du dispositif 300, notamment par rapport à un dispositif qui possèderait, par exemple, un circuit de commutation externe au module 306 embarqué d'identification d'abonné.

Le dispositif 300 peut comporter d'autres circuits. Ces circuits sont, en figure 3, symbolisés par un bloc 320 (FCT) .

La figure 4 représente, de façon schématique et partielle, un mode de réalisation du module 306 embarqué d'identification d'abonné du dispositif 300 de la figure 3.

Selon ce mode de réalisation, la première interface 308A (ISO_IN) du module 306 embarqué d'identification d'abonné comporte :
un plot 402A (ISO_CLK_IN), adapté à recevoir un signal de synchronisation, ou signal d'horloge ;
un autre plot 404A (ISO_IO_IN), adapté à échanger des signaux de données avec le modem 302 (figure 3) ; et
encore un autre plot 406A (ISO_RST_IN), adapté à recevoir un signal de réinitialisation.

De façon analogue, la deuxième interface 308C (ISO_OUT) du module 306 embarqué d'identification d'abonné comporte :
un plot 402C (ISO_CLK_OUT), adapté à transmettre un signal de synchronisation, ou signal d'horloge ;
un autre plot 404C (ISO_IO_OUT), adapté à échanger des signaux de données avec la carte SIM 310C (figure 3) ; et
encore un autre plot 406C (ISO_RST_OUT), adapté à transmettre un signal de réinitialisation.

Les plots 402A, 404A et 406A de la première interface 308A sont destinés à être reliés, de préférence connectés, à des plots (non représentés) du modem 302 (figure 3). Les plots 402C, 404C et 406C de la deuxième interface 308C sont destinés à être reliés, de préférence connectés, à des plots (non représentés) d'une interface d'un logement ou emplacement (non représenté) destiné à recevoir la carte SIM 310C (figure 3) .

Dans l'exemple représenté, le circuit 312 de commutation comporte :
une porte logique Et 412A, dont une entrée est reliée, de préférence connectée, à la borne 402A ;
une porte logique Et 414A, dont une entrée est reliée, de préférence connectée, à la borne 404A ;
une porte logique Et 416A, dont une entrée est reliée, de préférence connectée, à la borne 406A ;
une porte logique Et 412C, dont une entrée est reliée, de préférence connectée, à la borne 402A ;
une porte logique Et 414C, dont une entrée est reliée, de préférence connectée, à la borne 404A ; et
une porte logique Et 416C, dont une entrée est reliée, de préférence connectée, à la borne 406A.

L'autre entrée de chaque porte logique 412A, 414A, 416A reçoit, par exemple, un signal binaire image de l'état d'un bit noté eSIM_CFG. Le bit eSIM_CFG est, par exemple, un bit de configuration du circuit 312 de commutation. Dans l'exemple représenté, le bit eSIM_CFG est stocké dans un registre d'état d'une mémoire 420 (REG - eSIM_CFG) du module 306 embarqué d'identification d'abonné. La mémoire 420 est, par exemple, une mémoire non volatile. Cela permet ainsi notamment de mémoriser l'état du bit eSIM_CFG lorsque le dispositif 300 est mis hors tension.

En revanche, l'autre entrée de chaque porte logique 412C, 414C, 416C reçoit, par exemple, un signal binaire image de l'inverse de l'état du bit eSIM_CFG. Dans l'exemple représenté, le signal binaire transmis aux portes logiques 412A, 414A et 416A est inversé, par un inverseur 422, avant d'être transmis aux portes logiques 412C, 414C et 416C. Cela permet de n'utiliser qu'un seul signal binaire pour commander l'état, passant ou bloqué, des portes logiques 412A, 414A et 416A et des portes logiques 412C, 414C et 416C, respectivement.

Dans l'exemple représenté, si le bit eSIM_CFG est à l'état haut, les portes logiques 412A, 414A et 416A sont alors passantes tandis que les portes logiques 412C, 414C et 416C sont bloquées, ce qui a pour effet de relier les plots 402A, 404A et 406A au module 310A (ISO7816). En revanche, si le bit du registre 420 d'état est à l'état bas, les portes logiques 412A, 414A et 416A sont alors bloquées tandis que les portes logiques 412C, 414C et 416C sont passantes, ce qui a pour effet de relier les plots 402A, 404A et 406A aux plots 402C, 404C et 406C, respectivement.

Plus généralement, lorsque le bit eSIM_CFG est à l'état haut, la liaison physique entre le modem 302 (figure 3) et le module 310A est établie, tandis que la liaison physique entre le modem 302 et la carte SIM 310C (figure 3) est interrompue. Cela correspond, par exemple, à une situation dans laquelle on souhaite communiquer en utilisant le module 310A et où l'on ne souhaite pas utiliser la carte SIM 310C.

À l'inverse, lorsque le bit eSIM_CFG est à l'état bas, la liaison physique entre le modem 302 (figure 3) et le module 310A est interrompue, tandis que la liaison physique entre le modem 302 et la carte SIM 310C (figure 3) est établie. Cela correspond, par exemple, à une situation dans laquelle on souhaite communiquer en utilisant la carte SIM 310C et où l'on ne souhaite pas utiliser le module 310A.

La valeur du bit eSIM_CFG est, par exemple, configurée à l'état bas ou haut selon que le dispositif 300 (figure 3) est équipé ou dépourvu d'un logement susceptible de recevoir la carte SIM 310C. Le module 306 peut ainsi avantageusement être utilisé dans différents types de dispositifs, par exemple dans des dispositifs équipés ou non d'un logement destiné à recevoir la carte SIM 310C. On obtient ainsi une meilleure flexibilité d'utilisation.

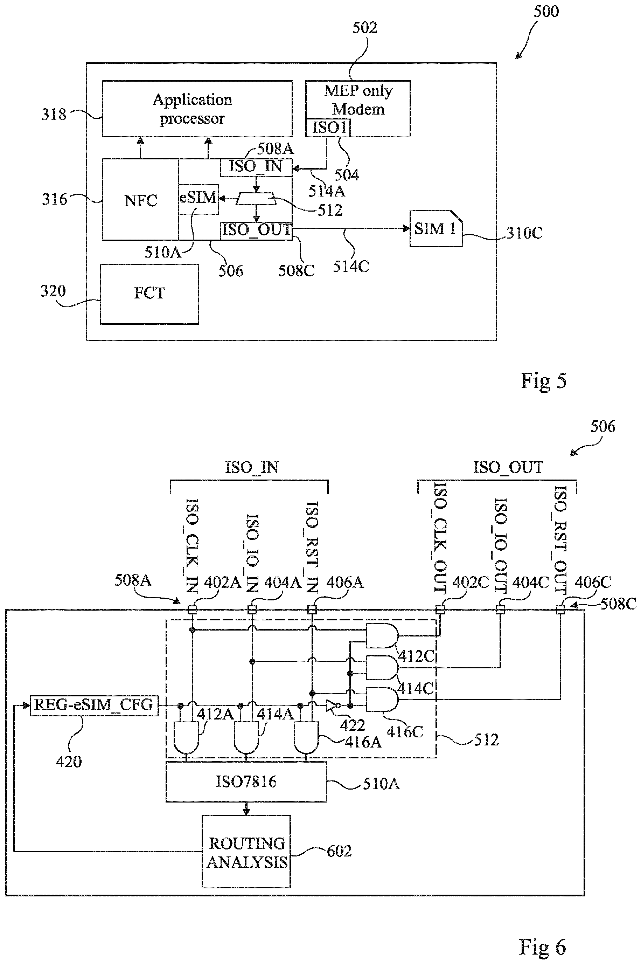

La figure 5 représente, de façon schématique et sous forme de blocs, un autre mode de réalisation d'un dispositif 500 électronique de communication radiofréquence. Le dispositif 500 de la figure 5 comprend des éléments communs avec le dispositif 300 de la figure 3. Ces éléments communs ne seront pas détaillés à nouveau ci-après.

Par rapport au dispositif 300 de la figure 3, le dispositif 500 de la figure 5 comporte, à la place du modem 302, un autre circuit modulateur-démodulateur 502 (MEP only Modem), ou modem. Le modem 502 est, par exemple, capable d'encoder, sur une même liaison, des communications correspondant à plusieurs profils d'identification d'abonné. Le modem 502 est, par exemple, un modem dit à activation de profils multiples (Multiple Enable Profile - MEP).

Dans l'exemple représenté, le modem 502 possède une interface 504 (ISO1). L'interface 504 du modem 502 est, par exemple, semblable à l'interface 304A du modem 302 (figure 3) .

Selon ce mode de réalisation, le dispositif 500 comporte, en outre, un module 506 embarqué d'identification d'abonné (embedded Subscriber Identity Module - eSIM). Dans l'exemple représenté, le module 506 embarqué d'identification d'abonné du dispositif 500 comprend :
une première interface 508A (ISO_IN) de communication reliée, de préférence connectée, au modem 502 ; et
une deuxième interface 508C (ISO_OUT) de communication reliée, de préférence connectée, à la carte SIM 310C (SIM 1) ;
un module 510A (eSIM) de communication ; et
un circuit 512 de commutation.

L'interface 508A, l'interface 508C, le module 510A de communication et le circuit 512 de commutation du dispositif 500 sont, par exemple, respectivement analogues à l'interface 308A, à l'interface 308C, au module 310A et au circuit 312 du dispositif 300 précédemment décrit en relation avec la figure 3.

Dans l'exemple représenté :
la première interface 508A de communication du module 506 embarqué d'identification d'abonné est connectée, par une liaison 514A, à l'interface 504 du modem 502 ; et
la deuxième interface 508B de communication du module 506 embarqué d'identification d'abonné est connectée, par une liaison 514C, à la carte SIM 310C.

Le module 510A de communication du dispositif 500 regroupe, par exemple, des fonctionnalités analogues à celles de plusieurs cartes SIM. À titre d'exemple, cela permet au module 510A de posséder des fonctionnalités similaires à celles du module 310A (figure 3) et de la carte SIM 310B (figure 3) réunies. En d'autres termes, deux profils d'identification d'abonné sont, par exemple, programmés dans le module 510A.

Un avantage du dispositif 500 exposé en relation avec la figure 5 réside dans le fait qu'il permet conjointement l'utilisation de la carte SIM physique 310C et du module 510A de communication, dans lequel sont programmés plusieurs profils d'identification d'abonné. Cela confère ainsi une plus grande flexibilité d'utilisation au dispositif 500 par rapport, notamment, à un dispositif dans lequel seule l'utilisation de la carte SIM physique 310C serait possible. En effet, la présence du circuit 512 de commutation dans le dispositif 500 offre la possibilité d'utiliser, en plus de la carte SIM 310C, le module 510A pour disposer de davantage de profils d'identification d'abonné, ou profils SIM.

Dans un cas où l'emplacement (non représenté) destiné à recevoir la carte SIM 310C n'est pas utilisé, le module 506 embarqué d'identification d'abonné peut, de façon analogue à ce qui a été exposé précédemment en relation avec la figure 4, être paramétré pour diriger toutes les communications vers le module 510 de communication.

La figure 6 représente, de façon schématique et partielle, un mode de réalisation du module 506 embarqué d'identification d'abonné du dispositif 500 de la figure 5.

Selon ce mode de réalisation, la première interface 508A (ISO_IN), la deuxième interface 508B (ISO_OUT), le module 510 de communication et le circuit 512 de commutation du module 506 embarqué d'identification d'abonné sont semblables, respectivement, à la première interface 308A, à la deuxième interface 308B, au module 310 de communication et au circuit 312 de commutation du module 306 embarqué d'identification d'abonné de la figure 4.

Selon ce mode de réalisation, les plots 402A, 404A et 406A de la première interface 508A sont destinés à être reliés, de préférence connectés, à des plots (non représentés) du modem 502 (figure 5). Les plots 402C, 404C et 406C de la deuxième interface 508C sont destinés à être reliés, de préférence connectés, à des plots (non représentés) d'un logement ou emplacement (non représenté) destiné à recevoir la carte SIM 310C (figure 5).

Le module 506 embarqué d'identification d'abonné comporte, par exemple, un bloc 602 (ROUTING ANALYSIS) d'analyse et de routage de données transmises par le modem 502 (figure 5), par exemple lors d'une communication du dispositif 500 avec un autre dispositif (non représenté). Le bloc 602 est, plus précisément, configuré pour analyser si les données transmises par le modem 502 sont à destination du module 510A ou de la carte SIM 310C. En fonction du résultat de cette analyse, le bloc 602 change l'état du bit eSIM_CFG mémorisé par le registre de la mémoire 420 (REG - eSIM_CFG) pour aiguiller ou rediriger les données soit vers le module 510A, soit vers la carte SIM 310C.

Les fonctionnalités du bloc 602 sont, par exemple, mises en oeuvre par un logiciel exécuté par un microcontrôleur du module 506 embarqué d'identification d'abonné. Lorsque le dispositif 500 (figure 5), initialement en mode de veille, se met à recevoir des données transmises par le modem 502, cela provoque, par exemple, une sortie du mode de veille et une redistribution des communications vers le module 510A ou vers la carte SIM 310C.

En variante, les fonctionnalités du bloc 602 sont exécutées par un circuit en logique câblée ou une machine d'états du module 506 embarqué d'identification d'abonné. Cela présente l'avantage d'éviter de sortir le dispositif 500 (figure 5) du mode de veille à chaque réception d'une communication, donc d'économiser l'énergie consommée par le dispositif 500.

En pratique, le module 506 embarqué d'identification d'abonné comporte un module (non représenté) de démultiplexage des signaux transmis par le modem 502 sur la liaison 514A. Le module 506 embarqué d'identification d'abonné comporte, en outre, un module (non représenté) de multiplexage des signaux à transmettre au modem 502 sur la liaison 514A.

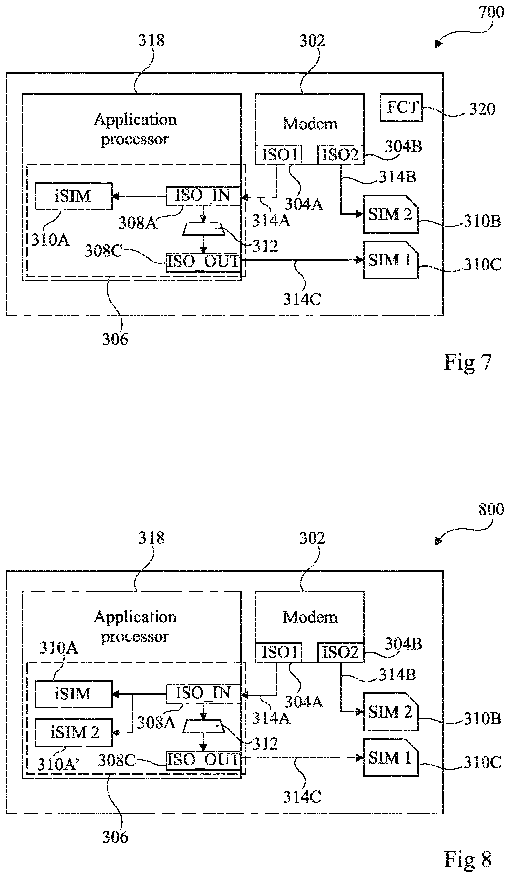

La figure 7 représente, de façon schématique et sous forme de blocs, un mode de réalisation d'un dispositif 700 électronique de communication radiofréquence.

Le dispositif 700 de la figure 7 comporte des éléments communs avec le dispositif 300 de la figure 3. Ces éléments communs ne seront pas détaillés à nouveau ci-après.

Le dispositif 700 de la figure 7 diffère du dispositif 300 de la figure 3 principalement en ce que, dans le dispositif 700, le module 306 d'identification d'abonné est un module intégré d'identification d'abonné (integrated Subscriber Identity Module - iSIM). Le module 306 intégré d'identification d'abonné du dispositif 700 fait, par exemple, partie du microprocesseur 318 (Application processor). Le microprocesseur 318 possède, par exemple, une architecture du type système sur une puce (SoC).

Plus précisément, selon un mode de réalisation, le module 310A (iSIM) de communication, le circuit de commutation 312 et les interfaces 308A (ISO_IN) et 308C (ISO_OUT) de communication sont intégrés au microprocesseur 318. En pratique, le module 310A du dispositif 700 est, par exemple, programmé dans un circuit sécurisé intégré au microprocesseur 318.

Le dispositif 700 présente des fonctionnalités et des avantages similaires à ceux du dispositif 300 (figure 3). Le dispositif 700 offre, notamment, la possibilité de communiquer en utilisant soit la carte SIM 310C (SIM 1), soit le module 310A de communication du module 306 intégré d'identification d'abonné. Le dispositif 700 possède en outre des dimensions réduites par rapport à un dispositif comportant un module embarqué d'identification d'abonné dissocié physiquement du microprocesseur 318.

En variante, la carte SIM 310C est remplacée par un module embarqué d'identification d'abonné relié, de préférence connecté, à l'interface 308C du module 306 par la liaison 314C. Dans ce cas, le module embarqué d'identification d'abonné est une puce électronique soudée sur une carte de circuit imprimé du dispositif 700, par exemple la carte électronique recevant le microprocesseur 318.

Bien que cela n'ait pas été représenté en figure 7, le dispositif 700 peut comporter un module de communication en champ proche analogue au module 316 du dispositif 300.

La figure 8 représente, de façon schématique et sous forme de blocs, un autre mode de réalisation d'un dispositif 800 électronique de communication radiofréquence.

Le dispositif 800 de la figure 8 comporte des éléments communs avec le dispositif 700 de la figure 7. Ces éléments communs ne seront pas détaillés à nouveau ci-après.

Le dispositif 800 de la figure 8 diffère du dispositif 700 de la figure 7 principalement en ce que le dispositif 800 comporte, outre le module 310A (iSIM), un autre module 310A' (iSIM 2) intégré au microprocesseur 318 (Application processor). En pratique, les modules 310A et 310A ' correspondent, par exemple, à deux profils d'identification d'abonné programmés dans le module 306 intégré d'identification d'abonné du dispositif 800. Dans ce cas, le modem 302 (Modem) du dispositif 800 est, par exemple, capable d'encoder sur la liaison 314A des communications destinées aux profils d'abonnés 310A et 310A'. Le modem 302 du dispositif 800 possède, par exemple, des fonctionnalités analogues au modem 502 du dispositif 500 (figure 5). En d'autres termes, le modem 302 du dispositif 800 est un modem MEP.

Le dispositif 800 permet de communiquer en utilisant, en plus de la carte SIM 310B (SIM 2), soit la carte SIM 310C (SIM 1), soit les modules 310A et 310A' de communication du module 306 intégré d'identification d'abonné. En d'autres termes, le dispositif 800 peut utiliser, pour communiquer, soit les deux cartes SIM physiques 310B et 310C, soit la carte SIM physique 310B et les deux profils 310A et 310A' programmés dans le module 306 intégré d'identification d'abonné. Dans le cas où la carte SIM 310B et les profils 310A et 310A' sont utilisés, on bénéficie, au total, de trois profils d'identification d'abonné.

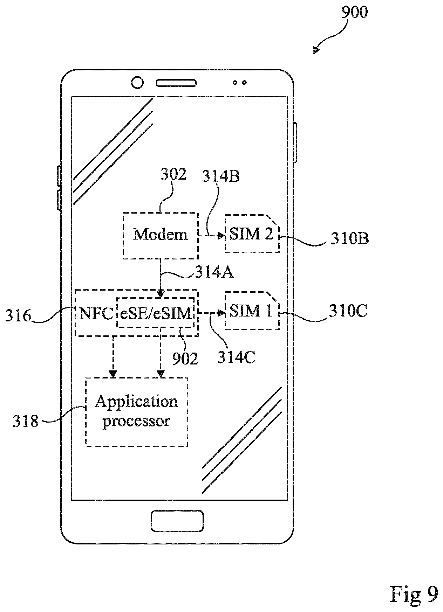

La figure 9 représente un téléphone mobile 900 intégrant un circuit de communication radiofréquence comportant un module embarqué d'identification d'abonné. Plus précisément, la figure 9 représente un exemple d'implantation du mode de réalisation exposé en relation avec la figure 3.

Dans l'exemple représenté, le module embarqué d'identification d'abonné (non représenté) est intégré à un module sécurisé 902 (eSE/eSIM) du module 316 de communication en champ proche du téléphone mobile 900. Cela permet notamment un gain de place à l'intérieur du téléphone mobile 900.

Grâce au module embarqué d'identification d'abonné intégré au module 902, le téléphone 900 peut, en fonction des besoins d'un constructeur et/ou d'un utilisateur du téléphone 900, être utilisé avec les deux cartes SIM physiques 310B et 310C, ou avec la carte SIM physique 310B et un profil d'identification d'abonné programmé dans le module 902. Cela confère ainsi une grande flexibilité d'utilisation au téléphone mobile 900.

Divers modes de réalisation, modes de mise en oeuvre et variantes ont été décrits. La personne du métier comprendra que certaines caractéristiques de ces divers modes de réalisation, modes de mise en oeuvre et variantes pourraient être combinées, et d'autres variantes apparaîtront à la personne du métier. En particulier, les modes de réalisation et les modes de mise en oeuvre exposés précédemment ne se limitent pas aux nombres de cartes SIM et de modems décrits et sont transposables par la personne du métier à des dispositifs comportant un nombre quelconque de cartes SIM et de modems.

Enfin, la mise en oeuvre pratique des modes de réalisation et variantes décrits est à la portée de la personne du métier à partir des indications fonctionnelles données ci-dessus. En particulier, d'autres circuits de commutation peuvent être prévus par la personne du métier pour aboutir aux fonctionnalités décrites dans les modes de réalisation et modes de mise en oeuvre ci-dessus.

## Revendications

1. Module (306 ; 506) d'identification d'abonné comportant :
une première interface (308A ; 508A) de communication, comprenant des premiers plots (402A, 404A, 406A) destinés à être reliés à un circuit (302 ; 502) modulateur-démodulateur ;
une deuxième interface (308C ; 508C) de communication, comprenant des deuxièmes plots (402C, 404C, 406C) destinés à être reliés à une carte (310C) à module d'identification d'abonné ; et
un circuit (312 ; 512) de commutation, configuré pour relier les premiers plots aux deuxièmes plots ou à un module (310A ; 510A) de communication intégré au module d'identification d'abonné.

2. Module selon la revendication 1, dans lequel le module (306 ; 506) d'identification d'abonné comporte en outre une mémoire (420) non volatile, le circuit (312 ; 512) de commutation étant commandé en fonction de l'état d'un bit (eSIM_CFG) d'un registre de ladite mémoire.

3. Module selon la revendication 1 ou 2, dans lequel le circuit (312 ; 512) de commutation comporte un module (602) d'analyse et de routage, configuré pour analyser et rediriger des signaux reçus par la première interface (508A) de communication du module (506) d'identification d'abonné.

4. Module selon l'une quelconque des revendications 1 à 3, dans lequel chacune des première et deuxième interfaces (308A, 308C ; 508A, 508C) est choisie parmi :
une interface normalisée ISO 7816 ;
une interface I2C ;
une interface I3C ; et
une interface série SPI.

5. Dispositif électronique (300 ; 500) comportant :
un module (306 ; 506) d'identification d'abonné selon l'une quelconque des revendications 1 à 4 ;
un circuit (302 ; 502) modulateur-démodulateur ; et
un premier emplacement destiné à recevoir une première carte (310C) à module d'identification d'abonné.

6. Dispositif selon la revendication 5, dans lequel le module (306 ; 506) d'identification d'abonné est un module embarqué d'identification d'abonné.

7. Dispositif selon la revendication 5 ou 6, dans lequel le module (306 ; 506) d'identification d'abonné fait partie d'un module (316) de communication en champ proche du dispositif (300 ; 500).

8. Dispositif selon la revendication 7, dans lequel le module (306 ; 506) d'identification d'abonné est intégré à un module sécurisé (902) du module (316) de communication en champ proche du dispositif (300 ; 500).

9. Dispositif selon la revendication 5, comportant en outre un microprocesseur (318) de type système sur une puce, le module (306 ; 506) d'identification d'abonné étant intégré audit microprocesseur.

10. Dispositif selon l'une quelconque des revendications 5 à 9, dans lequel :
le circuit (302 ; 502) modulateur-démodulateur comporte une troisième interface (304A ; 504) de communication, comprenant des troisièmes plots reliés aux premiers plots (402A, 404A, 406A) de la première interface (308A ; 508A) de communication du module (306 ; 506) d'identification d'abonné ; et
le premier emplacement comporte une quatrième interface de communication, comprenant des quatrièmes plots reliés aux deuxièmes plots (402C, 404C, 406C) de la deuxième interface (308C ; 508C) de communication du module d'identification d'abonné.

11. Dispositif selon la revendication 10, dans lequel le circuit (302) modulateur-démodulateur comporte en outre une cinquième interface (304B) de communication, comprenant des cinquièmes plots reliés à des sixièmes plots d'une sixième interface de communication d'un deuxième emplacement destiné à recevoir une deuxième carte (310B) à module d'identification d'abonné.

## Patentansprüche

1. Ein Teilnehmer-Identifikationsmodul (306; 506), das Folgendes aufweist:
eine erste Kommunikationsschnittstelle (308A; 508A), die erste Pads (402A, 404A, 406A) aufweist, welche mit einer Modulator-Demodulator-Schaltung (302; 502) gekoppelt werden sollen;
eine zweite Kommunikationsschnittstelle (308C; 508C), die erste Pads (402C, 404C, 406C) aufweist, welche mit einer Teilnehmer-Identifikationsmodul-Karte (310C) gekoppelt werden sollen; und
eine Wechselschaltung (312, 512), die eingerichtet ist die ersten Pads mit den zweiten Pads zu koppeln oder mit einem Kommunikationsmodul (310A; 510A), das in das Teilnehmer-Identifikationsmodul integriert ist.

2. Das Modul nach Anspruch 1, wobei das Teilnehmer-Identifikationsmodul (306; 506) ferner einen nicht-flüchtigen Speicher (420) aufweist, wobei die Wechselschaltung (312; 512) entsprechend dem Zustand eines Bits (eSIM_CFG) eines Registers des Speichers gesteuert wird.

3. Das Modul nach Anspruch 1 oder 2, wobei die Wechselschaltung (312; 512) ein Analyse- und Weiterleitungsmodul (602) aufweist, das eingerichtet ist Signale zu analysieren und umzuleiten, die von der ersten Kommunikationsschnittstelle (508A) des Teilnehmer-Identifikationsmoduls (506) empfangen wurden.

4. Das Modul nach einem der Ansprüche 1 bis 3, wobei jede aus der ersten und zweiten Kommunikationsschnittstelle (308A, 308C; 508A, 508C) ausgewählt ist aus dem Folgenden:
eine standardisiertes ISO 7816 Schnittstelle;
eine 12C Schnittstelle;
eine 13C Schnittstelle; und
eine SPI Reihen-Schnittstelle.

5. Ein elektronisches Gerät (300; 500), das Folgendes aufweist:
ein Teilnehmer-Identifikationsmodul nach einem der Ansprüche 1 bis 4;
eine Modulator-Demodulator-Schaltung (302; 502); und
ein erster Ort, der eine erste Teilnehmer-Identifikationsmodul-Karte (310C) aufnehmen soll.

6. Das Gerät nach Anspruch 5, wobei das Teilnehmer-Identifikationsmodul (306; 506) ein eingebettetes Teilnehmer-Identifikationsmodul ist.

7. Das Gerät nach Anspruch 5 oder 6, wobei das Teilnehmer-Identifikationsmodul (306; 506) Teil eines Nahfeldkommunikationsmoduls (316) des Geräts (300; 500) bildet.

8. Das Gerät nach Anspruch 7, wobei das Teilnehmer-Identifikationsmodul (306; 506) in ein sicheres Modul (902) des Nahfeldkommunikationsmoduls (316) des Geräts (300; 500) integriert ist.

9. Das Gerät nach Anspruch 5, das ferner einen Mikroprozessor (318) des Typs system-on-chip aufweist, wobei das Teilnehmer-Identifikationsmodul (306; 506) in den Mikroprozessor integriert ist.

10. Das Gerät nach einem der Ansprüche 5 bis 9, wobei:
die Modulator-Demodulator-Schaltung (302; 502) eine dritte Kommunikationsschnittstelle (304A; 504) aufweist, die dritte Pads aufweist, die mit den ersten Pads (402A, 404A, 406A), der ersten Kommunikationsschnittstelle (308A; 508A) des Teilnehmer-Identifikationsmoduls (306; 506) gekoppelt sind; und
der erste Ort eine vierte Kommunikationsschnittstelle aufweist, die vierte Pads aufweist, die mit den zweiten Pads (402C, 404C, 406C) der zweiten Kommunikationsschnittstelle (308C; 508C) des Teilnehmer-Identifikationsmoduls gekoppelt sind.

11. Das Gerät nach Anspruch 10, wobei die Modulator-Demodulator-Schaltung (302) ferner eine fünfte Kommunikationsschnittstelle (304B) aufweist, die fünfte Pads aufweist, die mit sechsten Pads einer sechsten Kommunikationsschnittstelle eines zweiten Ortes gekoppelt sind, der eine zweite Teilnehmer-Identifikationsmodul-Karte (310B) aufnehmen soll.

## Claims

1. A subscriber identification module (306; 506) comprising:
a first communication interface (308A; 508A), comprising first pads (402A, 404A, 406A) intended to be coupled to a modulator-demodulator circuit (302; 502);
a second communication interface (308C; 508C), comprising second pads (402C, 404C, 406C) intended to be coupled to a subscriber identification module card (310C); and
a switching circuit (312; 512), configured to couple the first pads to the second pads or to a communication module (310A; 510A) integrated to the subscriber identification module.

2. The module according to claim 1, wherein the subscriber identification module (306; 506) further comprises a nonvolatile memory (420), the switching circuit (312; 512) being controlled according to the state of a bit (eSIM_CFG) of a register of said memory.

3. The module according to claim 1 or 2, wherein the switching circuit (312; 512) comprises an analysis and routing module (602), configured to analyze and redirect signals received by the first communication interface (508A) of the subscriber identification module (506).

4. The module according to any of claims 1 to 3, wherein each of the first and second interfaces (308A, 308C; 508A, 508C) is selected from among:
a standardized ISO 7816 interface;
an I2C interface;
an I3C interface; and
an SPI series interface.

5. An electronic device (300; 500) comprising:
the subscriber identification module according to any of claims 1 to 4;
a modulator-demodulator circuit (302; 502); and
a first location intended to receive a first subscriber identification module card (310C).

6. The device according to claim 5, wherein the subscriber identification module (306; 506) is an embedded subscriber identification module.

7. The device according to claim 5 or 6, wherein the subscriber identification module (306; 506) forms part of a near-field communication module (316) of the device (300; 500).

8. The device according to claim 7, wherein the subscriber identification module (306; 506) is integrated to a secure module (902) of the near-field communication module (316) of the device (300; 500).

9. The device according to claim 5, further comprising a microprocessor (318) of system-on-chip type, the subscriber identification module (306; 506) being integrated to said microprocessor.

10. The device of any of claims 5 to 9, wherein:
the modulator-demodulator circuit (302; 502) comprises a third communication interface (304A; 504), comprising third pads coupled to the first pads (402A, 404A, 406A) of the first communication interface (308A; 508A) of the subscriber identification module (306; 506); and
the first location comprises a fourth communication interface, comprising fourth pads coupled to the second pads (402C, 404C, 406C) of the second communication interface (308C; 508C) of the subscriber identification module.

11. The device according to claim 10, wherein the modulator-demodulator circuit (302) further comprises a fifth communication interface (304B), comprising fifth pads coupled to sixth pads of a sixth communication interface of a second location intended to receive a second subscriber identification module card (310B).
